# FASCICULE DE BREVET EUROPEEN

(11) **EP 3 990 535 B1**
(45) Date de publication et mention de la délivrance du brevet: **30.08.2023**
(21) Numéro de dépôt: 20747037.8
(22) Date de dépôt: 25.06.2020
(51) Int. Cl.: C08K 5/1545, C08K 11/00, C08L 23/04, C08L 23/10

(54) **MATERIAU POUR EMBALLAGE ALIMENTAIRE ET SON PROCEDE DE PRÉPARATION**
MATERIAL FÜR LEBENSMITTELSVERPACKUNG UND VERFAHREN ZU SEINER HERSTELLUNG
MATERIAL FOR FOOD PACKAGING AND PROCESS OF PREPARATION THEREOF

(30) Priorité: 27.06.2019 FR 1907060
(43) Date de publication de la demande: 04.05.2022
(73) Titulaire: Université de Pau et des Pays de l'Adour, 64012 Pau Cedex (FR); Centre National de la Recherche Scientifique, 75794 Paris Cedex 16 (FR)
(72) Inventeur: ALLAL, Ahmed Michel, 64110 PAU (FR); ISSART, Ambre, 46100 PLANIOLES (FR)
(74) Mandataire: Cabinet Beau de Loménie
(86) Numéro de dépôt international: PCT/FR2020/051106
(87) Numéro de publication internationale: WO 2020/260829

(56) Documents cités:
- EP-A2- 0 878 502
- US-A1- 2010 305 241
- US-A1- 2018 290 811
- LYNDA BOUARAB CHIBANE ET AL: "Plant antimicrobial polyphenols as potential natural food preservatives : Plant polyphenols for food preservation", JOURNAL OF THE SCIENCE OF FOOD AND AGRICULTURE, vol. 99, no. 4, 15 mars 2019 (2019-03-15), pages 1457-1474, XP055645239, GB ISSN: 0022-5142, DOI: 10.1002/jsfa.9357
- KIRSCHWENG B ET AL: "Natural antioxidants as stabilizers for polymers", POLYMER DEGRADATION AND STABILITY, BARKING, GB, vol. 145, 11 juillet 2017 (2017-07-11), pages 25-40, XP085235407, ISSN: 0141-3910, DOI: 10.1016/J.POLYMDEGRADSTAB.2017.07.012
- AMBRE ISSART ET AL: "Direct screening of food packaging materials for post-polymerization residues, degradation products and additives by liquid extraction surface analysis nanoelectrospray mass spectrometry (LESA-nESI-MS)", ANALYTICA CHIMICA ACTA, vol. 1058, 25 janvier 2019 (2019-01-25), pages 117-126, XP055676488, AMSTERDAM, NL ISSN: 0003-2670, DOI: 10.1016/j.aca.2019.01.028

## Description

L'invention concerne un matériau pour emballage alimentaire respectueux de l'environnement et de la santé de l'Homme, son procédé de fabrication et son utilisation dans un emballage alimentaire.

Les matériaux plastiques pour emballage alimentaire sont typiquement composés de 80 à 98% de polymère(s) et de 2 à 20% d'additif(s) tels que des antioxydants, des anti UV, des lubrifiants, des colorants, des charges...

Selon la règlementation en vigueur, tous les matériaux destinés à être en contact, directement ou indirectement, avec des denrées alimentaires doivent être suffisamment inertes pour, dans les conditions normales ou prévisibles de leur emploi, ne pas céder à ces denrées alimentaires des constituants en une quantité susceptible de présenter un danger pour la santé humaine, et ne pas entrainer une modification inacceptable de la composition des aliments ou altérer leur caractère organoleptique (règlement CE n°1935/2004).

Pour ces raisons, les additifs choisis, et les produits de dégradation éventuelle du matériau, ne doivent pas être nocifs pour la santé humaine, et ne doivent pas, ou très peu, migrer de l'emballage vers l'aliment. Il est également préférable que le matériau choisi soit stable dans le temps, et dans les conditions de fabrication et de mise en forme, afin d'éviter toute dégradation et la production d'impuretés potentiellement nocives. EP 0 878 502 divulgue des compositions à base de polymère de vitamine E et de polyols pour stabiliser des polymères (polyoléfine) pour l'emballage alimentaire.

Dans cette optique, des matériaux pour emballage alimentaires comportant des additifs naturels et non nocifs pour la santé humaine ont été développés comme dans la demande de brevet WO 2017/049364 notamment. Néanmoins, ces emballages ne sont pas suffisamment neutres vis-à-vis des aliments, et donc pour les consommateurs, c'est-à-dire que la migration de ces additifs du matériau pour emballage vers les aliments n'est pas toujours totalement évitée. De plus, les additifs naturels sont plus facilement sujets à dégradation dans les conditions de fabrication et de mise en forme de l'emballage alimentaire, et peuvent alors générer des produits de dégradation susceptibles de migrer vers les aliments.

Par ailleurs, les consommateurs sont de plus en plus soucieux du respect de l'environnement, et souhaitent des emballages qui ne comportent pas de composés nocifs pour l'environnement, et qui peuvent être recyclés. Ceci impose donc un choix judicieux des composés, du procédé de fabrication et de recyclage du matériau afin de garantir une bonne stabilité du matériau dans le temps, au fur et à mesure des recyclages, et donc l'absence de produits de dégradation susceptibles de migrer vers les aliments.

L'invention propose un matériau pour emballage alimentaire qui est respectueux de l'environnement grâce à l'emploi de composés non nocifs vis-à-vis de l'environnement et permettant le recyclage du matériau. L'invention propose également un matériau pour emballage alimentaire qui est respectueux de la santé humaine grâce à l'emploi de composés non nocifs pour l'Homme et ne migrant pas ou très peu du matériau pour emballage vers l'aliment, dans le temps et au fur et à mesure des recyclages. Enfin, le matériau pour emballage alimentaire selon l'invention permet avantageusement de préserver les propriétés organoleptiques des aliments dans le temps et au fur et à mesure des recyclages.

Pour cela, le matériau pour emballage alimentaire selon l'invention comprend un polymère de type polyoléfine, et un mélange particulier d'antioxydants. Plus précisément, le matériau pour emballage alimentaire selon l'invention comprend au moins une polyoléfine, de la vitamine E et un extrait de bois de Quebracho comprenant des tanins condensés. Le matériau pour emballage alimentaire selon l'invention comprend alors au moins 0,1% en poids de tanins condensés par rapport au poids du matériau pour emballage alimentaire. Les Demandeurs ont en effet découvert de manière surprenante que la présence d'au moins 0,1% en poids de tanins condensés issus d'un extrait de bois de Quebracho, par rapport au matériau pour emballage alimentaire, en association avec de la vitamine E permet de stabiliser le matériau : la migration de composés du matériau vers l'aliment est très significativement réduite voire supprimée. De plus, un tel matériau pour emballage alimentaire est stable dans le temps et peut être recyclé.

Le matériau pour emballage alimentaire selon l'invention présente avantageusement l'une ou l'autre des caractéristiques suivantes, seules ou en combinaison :
- l'extrait de bois de Quebracho comprend au moins 50% en poids, de préférence au moins 70% en poids et plus particulièrement au moins 85% en poids de tanins condensés par rapport au poids de l'extrait sec de l'extrait de bois de Quebracho ;
- la teneur totale en vitamine E et en extrait de bois de Quebracho appartient à la gamme allant de 0,5 à 3% en poids, et de préférence de 1 à 2,5% en poids par rapport au poids total du matériau pour emballage alimentaire ;
- le ratio massique entre la vitamine E et l'extrait du bois de Quebracho appartient à la gamme allant de 90 : 10 à 98 : 2, et en particulier est de 95 : 5 ;
- la polyoléfine est un polyéthylène ou un polypropylène ;
- la vitamine E est naturelle ou, de préférence, de synthèse ;
- le matériau pour emballage alimentaire est recyclable.

Par « extrait sec », on entend au sens de la présente invention la masse résiduelle d'un matériau duquel les composés volatiles (tels que les solvants ou diluants) ont été éliminés.

L'invention concerne également la préparation d'un matériau pour emballage alimentaire selon l'invention, c'est-à-dire non nocif pour l'environnement, recyclable, respectueux de la santé humaine et/ou préservant les propriétés organoleptiques des aliments. Pour cela, les Demandeurs ont mis au point un procédé de préparation du matériau au cours duquel les polymères et les additifs employés ne sont pas dégradés. Plus précisément, le procédé de préparation d'un matériau pour emballage alimentaire selon l'invention comprend les étapes successives d'obtention d'un mélange d'antioxydants en mélangeant de la vitamine E et de l'extrait de bois de Quebracho, et d'incorporation du mélange d'antioxydants à la polyoléfine et d'extrusion du mélange d'antioxydants et de polyoléfine. Avantageusement, l'extrusion est réalisée à une température inférieure à 200°C. Ainsi, la polyoléfine et les antioxydants ne sont pas dégradés lors du procédé de préparation du matériau.

L'invention concerne encore un emballage alimentaire formé à partir d'un matériau pour emballage alimentaire selon l'invention, c'est-à-dire non nocif pour l'environnement, recyclable, respectueux de la santé humaine et/ou préservant les propriétés organoleptiques des aliments qu'il contient. Pour cela, l'emballage alimentaire selon l'invention est formé à partir de, ou comprend, le matériau pour emballage alimentaire selon l'invention. Alternativement, l'emballage alimentaire selon l'invention est formé, ou comprend, un matériau pour emballage alimentaire obtenu selon le procédé de préparation d'un matériau pour emballage alimentaire selon l'invention.

L'invention concerne également l'utilisation d'un matériau pour emballage alimentaire selon l'invention, ou obtenu selon le procédé de l'invention, pour la fabrication d'un emballage alimentaire.

Enfin, l'invention concerne également le recyclage d'un matériau pour emballage alimentaire selon l'invention, ou obtenu selon le procédé selon l'invention, et un matériau pour emballage alimentaire recyclé ainsi obtenu.

Diverses autres caractéristiques ressortent de la description faite ci-dessous en référence aux dessins qui montrent, à titre d'exemples non limitatifs, des formes de réalisation de l'objet de l'invention.
[Fig. 1] La figure 1 représente les analyses thermogravimétriques d'un matériau selon l'invention à base de polypropylène et de matériaux hors invention à base de polypropylène ne comprenant pas d'extrait de bois de Quebracho.
[Fig. 2] La figure 2 représente les analyses thermogravimétriques d'un matériau selon l'invention à base de polyéthylène et de matériaux hors invention à base de polyéthylène ne comprenant pas d'extrait de bois de Quebracho.
[Fig. 3] La figure 3 représente les spectrogrammes de masse de matériaux pour emballage alimentaire selon l'invention et hors invention comprenant du polyprolylène après un recyclage.
[Fig. 4] La figure 4 représente les spectrogrammes de masse de matériaux pour emballage alimentaire selon l'invention et hors invention comprenant du polyéthylène après un recyclage.
[Fig. 5] La figure 5 représente les spectrogrammes de masse de matériaux pour emballage alimentaire selon l'invention et hors invention comprenant du polypropylène après 9 recyclages.
[Fig. 6] La figure 6 représente les spectrogrammes de masse de matériaux selon l'invention et hors invention comprenant du polyéthylène après 9 recyclages.

L'invention concerne donc un matériau utilisé pour un emballage alimentaire comprenant une matrice polymérique et un mélange d'antioxydants.

La matrice polymérique est composée d'au moins un polymère de type polyoléfine, de préférence exclusivement d'une ou plusieurs polyoléfines, et en particulier d'une seule polyoléfine.

Dans le cadre de l'invention, une « polyoléfine » ou un « polymère de type polyoléfine » désigne un polymère aliphatique saturé issu de la polymérisation d'une oléfine.

L'utilisation de polyoléfines dans des matériaux pour emballage alimentaire est usuelle dans l'état de l'art, et toutes polyoléfines habituellement employées par l'homme de l'art peuvent convenir dans le cadre de l'invention.

Selon un mode préféré de réalisation, la polyoléfine est choisie parmi les polyéthylènes et les polypropylènes.

De préférence, la polyoléfine est une polyoléfine de haut poids moléculaire. Ainsi, avantageusement, lorsque la polyoléfine est du polyéthylène, celui- ci a de préférence un poids moléculaire supérieur ou égal à 80 000 g/mol, de préférence supérieur ou égal à 100 000 g/mol. De même, avantageusement, lorsque la polyoléfine est du polypropylène, celui-ci a de préférence un poids moléculaire supérieur ou égal à 40 000 g/mol, de préférence supérieur ou égal à 70 000 g/mol.

De préférence, le polymère a un indice de fluidité à chaud (ou MFI pour « melt flow index en anglais) appartenant à la gamme allant de 1 à 16. Avantageusement, lorsque la polyoléfine employée est du polyéthylène, le MFI appartient à la gamme allant de 1 à 5. Lorsque la polyoléfine employée est du polypropylène, le MFI appartient avantageusement à la gamme allant de 4 à 16. Dans le cadre de l'invention, le MFI peut être mesuré en utilisant la norme NF T 51-016.

Selon un mode de réalisation particulier, la polyoléfine du matériau pour emballage alimentaire selon l'invention consiste en du polyéthylène.

Selon un autre mode de réalisation particulier, la polyoléfine du matériau pour emballage alimentaire selon l'invention consiste en du polypropylène.

Le matériau pour emballage alimentaire selon l'invention comprend avantageusement une teneur en polyoléfine(s) appartenant à la gamme allant de 80 à 99,9% en poids, de préférence de 90 à 99,8% en poids, de préférence de 95 à 99,7% en poids, de préférence de 97 à 99,5% en poids, et en particulier de 97,5 à 99% en poids, par rapport au poids total du matériau pour emballage alimentaire.

Dans le cadre de l'invention, le matériau pour emballage alimentaire comprend un mélange d'antioxydants qui comprend au moins de la vitamine E et un extrait de bois de Quebracho comprenant des tanins condensés.

Les Demandeurs ont constaté de manière surprenante que l'emploi d'une combinaison de vitamine E et de tanins condensés extraits du bois de Quebracho permet d'obtenir un matériau pour emballage alimentaire avec une bonne stabilité thermique et chimique dans le temps et pouvant être recyclé. Plus précisément, Les Demandeurs ont constaté une baisse significative, voire une suppression, de l'apparition et de la migration de produits de dégradation issus du matériau pour emballage alimentaire.

La vitamine E est connue pour ses propriétés antioxydantes, et a déjà été utilisée dans des matériaux pour emballage alimentaire. Cependant, employée seule, la vitamine E n'empêche pas la migration de composés du matériau pour emballage alimentaire vers les denrées alimentaires qu'il contient. L'emploi d'un extrait de bois de Quebracho particulier en combinaison avec la vitamine E est donc crucial pour la stabilité thermique et chimique du matériau pour emballage alimentaire selon l'invention.

Dans le cadre de l'invention, la vitamine E utilisée peut être de la vitamine E naturelle.

De préférence, la vitamine E utilisée dans le cadre de l'invention est de la vitamine E de synthèse. Selon ce mode de réalisation, la vitamine E peut être composée de tocophérol(s) (alpha, beta, gamma et/ou delta) et/ou de tocotriénol(s) (alpha, beta, gamma et/ou delta). Selon un mode particulier de réalisation, la vitamine E de synthèse utilisée est uniquement composée de tocophérol(s), et en particulier uniquement d'alpha-tocophérol.

Les tanins sont des composés phénoliques présents dans de nombreux végétaux. On distingue deux grandes familles de tanins : les tanins hydrolysables et les tanins condensés. Les tanins hydrolysables s'hydrolysent en milieu acide faible et se décomposent à haute température. Les tanins condensés sont des oligomères de flavan-3-ol et/ou de flava,-3,4-diol et sont difficilement hydrolysables mais peuvent se décomposer dans les solutions alcooliques acides.

Les Demandeurs se sont intéressés à l'emploi de tanins en raison de leur propriétés antioxydantes, et plus particulièrement au tanins condensés en raison notamment de leur meilleure stabilité thermique qui permet de limiter leur dégradation lors de la fabrication du matériau pour emballage alimentaire (et de l'éventuelle mise en forme de l'emballage alimentaire comprenant ledit matériau, voire son recyclage).

Le Quebracho (Schinopsis lorentzii) est un arbre originaire d'Amérique Latine qui est connu pour être riche en tanins. L'extrait de bois de Quebracho utilisé dans le cadre de l'invention est riche en tanins condensés. Cet extrait de bois de Quebracho peut notamment être obtenu commercialement auprès de la société Unitan sous la référence commerciale colotan GTH qui est riche en riche en tanins condensés et comprend 95% en masse de proanthocyanidins. Par extrait de bois de Quebracho, on entend un extrait issu de l'écorce ou du coeur du tronc ou des branches de l'arbre, et de préférence du coeur.

Plus précisément, l'extrait de bois de Quebracho utilisé dans le cadre de l'invention comprend au moins 50% en poids, de préférence 70% en poids et plus particulièrement au moins 85% en poids de tanins condensés, par rapport au poids de l'extrait sec de l'extrait de bois de Quebracho.

Selon un mode de réalisation particulier de l'invention, le matériau pour emballage alimentaire comprend du polyéthylène et un mélange d'antioxydants constitué de vitamine E, de préférence constituée d'alpha tocophérol, et d'un extrait de bois de Quebracho comprenant des tanins condensés.

Selon un autre mode de réalisation particulier de l'invention, le matériau pour emballage alimentaire comprend du polypropylène et un mélange d'antioxydants constitué de vitamine E, de préférence constituée d'alpha tocophérol, et d'un extrait de bois de Quebracho comprenant des tanins condensés.

De préférence, le matériau pour emballage alimentaire ne comprend, en tant qu'antioxydants, que la vitamine E et l'extrait de bois de Quebracho tels que définis ci-dessus.

Selon un mode de réalisation alternatif et non préféré, le mélange d'antioxydants utilisés dans le matériau pour emballage alimentaire selon l'invention comprend un ou plusieurs antioxydants additionnels distincts de la vitamine E et de l'extrait de bois de Quebracho comprenant des tanins condensés. A titre d'exemples d'antioxydants additionnels pouvant être utilisés dans le cadre de l'invention, on peut citer la vitamine C.

Quel que soit le mode de réalisation, le matériau pour emballage alimentaire selon l'invention comprend au moins 0,1% en poids de tannins condensés par rapport au poids dudit matériau pour emballage alimentaire. De préférence, le matériau pour emballage alimentaire selon l'invention comprend des tannins condensés en une teneur appartenant à la gamme allant de 0,1 % à 0,25 % en poids, et de préférence 0,125 % en poids, par rapport au poids du matériau pour emballage alimentaire.

Avantageusement, la teneur totale en mélange d'antioxydants dans le matériau pour emballage alimentaire selon l'invention appartient à la gamme allant de 0,5 à 3% en poids, de préférence de 1 à 2,5% en poids, et en particulier 2,5% en poids par rapport au poids total du matériau pour emballage alimentaire.

Avantageusement, le matériau pour emballage alimentaire comprend de 0,25% à 2,9% en poids, de préférence de 1% à 2,8% en poids, voire de 2,5 % à 2% en poids, et en particulier 2,375% en poids de vitamine E par rapport au poids total du matériau pour emballage alimentaire.

Avantageusement, le matériau pour emballage alimentaire comprend de 0,1% à 0,25% en poids de l'extrait de bois de Quebracho tel que défini dans le cadre de l'invention.

Selon un mode de réalisation préféré de l'invention, le mélange d'antioxydants est composé uniquement de vitamine E et d'un extrait de bois de Quebracho comprenant des tanins condensés. Selon ce mode de réalisation, le matériau pour emballage alimentaire selon l'invention comprend alors un mélange de vitamine E et d'extrait de bois de Quebracho comprenant des tanins condensés en une teneur totale allant de 0,5 à 3% en poids, et de préférence de 1 à 2,5% en poids par rapport au poids total du matériau pour emballage alimentaire.

Avantageusement, le ratio massique entre la vitamine E et l'extrait de bois de Quebracho présents dans le matériau pour emballage alimentaire selon l'invention appartient à la gamme allant de 90 : 10 à 98 : 2, et en particulier est de 95 : 5. Les Demandeurs ont constaté qu'un tel ratio massique est optimal pour éviter la migration de composés du matériau pour emballage alimentaire vers l'aliment.

Selon un mode de réalisation préféré de l'invention, le matériau pour emballage alimentaire comprend en tant que mélange d'antioxydants de 1 à 2,5% en poids d'un mélange de vitamine E et d'extrait de bois de Quebracho en un ratio massique de 95 : 5. Avantageusement, selon ce mode de réalisation, l'extrait de bois de Quebracho comprend au moins 85% en poids de tanins condensés par rapport au poids de l'extrait sec de bois de Quebracho.

De préférence, le matériau selon l'invention ne comprend aucun additif susceptible de se dégrader dans les conditions de fabrication, d'utilisation et de recyclage, voire ne comprend aucun autre composé que la polyoléfine, la vitamine E et l'extrait de bois de Quebracho tel que décrits ci-dessus. Bien que non préféré, le matériau pour emballage alimentaire selon l'invention peut également comprendre divers additifs autres que des antioxydants, tels que des anti-UV, des colorants, des charges ou des lubrifiants.

Selon un mode de réalisation particulièrement avantageux de l'invention, le matériau pour emballage alimentaire selon l'invention est recyclable. En particulier, ce matériau est recyclable au moins 5 fois, et de préférence au moins 9 fois, sans que des produits de dégradation soient observés.

Dans le cadre de l'invention, un matériau « recyclable » signifie que le matériau peut être remis en forme et réutilisé sans que ses propriétés physico chimiques soient altérées, et en particulier sans apparition de produit de dégradation susceptibles de migrer.

Dans le cadre de l'invention, la migration de composés provenant d'un matériau pour emballage alimentaire peut être mesurée selon la méthode décrite dans la publication Analytica Chimica Acta 1058 (2019) 117-126, ou suivant la norme européenne EU No 10/2011 " Matériaux et objets en matière plastique destinés à entrer en contact avec des denrées alimentaires ".

L'invention concerne également un procédé de préparation d'un matériau pour emballage alimentaire selon l'invention. Un tel procédé de préparation comprend les étapes successives suivantes :
(i) obtenir un mélange d'antioxydants en mélangeant de la vitamine E et de l'extrait de bois de Quebracho comprenant des tanins condensés,
(ii) incorporer le mélange d'antioxydants à la polyoléfine et extruder le mélange de polymère et d'antioxydants.

Avantageusement, la polyoléfine et le mélange d'antioxydants, comprenant de la vitamine E et un extrait de bois de Quebracho comprenant des tanins condensés, sont tels que définis pour le matériau pour emballage alimentaire selon l'invention.

Après extrusion, le matériau pour emballage alimentaire obtenu comprend au moins 0,1% en poids de tanins condensés par rapport au poids total du matériau final.

Avantageusement, les différentes étapes du procédé de préparation du matériau pour emballage alimentaire sont réalisées à pression atmosphérique.

Selon un mode de réalisation, le mélange à l'étape (i) est réalisé par un mélangeage mécanique. Par exemple, l'extrait de bois de Quebracho comprenant des tanins condensés peut être ajouté à la vitamine E puis le mélange d'antioxydants (comprenant éventuellement d'autres antioxydants additionnels préalablement mélangés) est mélangé dans un mélangeur mécanique.

A l'étape (ii), l'incorporation du mélange d'antioxydants à la polyoléfine peut être réalisée par ajout du mélange d'antioxydants à la polyoléfine. De préférence, ce mélange s'effectue lorsque le polymère est à l'état fondu. Pour cela, le polymère est chauffé au moins à une température égale à sa température de fusion Tfus, et de préférence à sa température de fusion Tfus +10°C. Avantageusement, le chauffage de la polyoléfine est réalisé simultanément à l'ajout du mélange d'antioxydants.

De préférence, l'incorporation du mélange d'antioxydants à la polyoléfine et l'extrusion ont lieu simultanément.

Le mélange d'antioxydants et de polyoléfine est extrudé dans une extrudeuse, par exemple une extrudeuse bi-vis. A titre d'exemple, on peut utiliser une extrudeuse bi-vis co-rotative dont la vitesse de rotation des vis est de 400 rpm avec une vitesse d'alimentation en polymère de 15 rpm.

En sortie d'extrudeuse, le matériau obtenu peut être refroidi puis broyé en granulés dans un granulateur.

Les antioxydants naturels sont connus pour se dégrader à température élevée. Pour cette raison, Les Demandeurs ont mis au point un procédé de préparation du matériau pour emballage alimentaire dans lequel la température d'extrusion n'est pas très élevée, et en particulier ne dépasse pas 200°C, de préférence appartient à la gamme allant de la température de fusion Tfus de la polyoléfine à 200 °C, et de préférence de Tfus + 10 °C à 200 °C. Ainsi, la dégradation des antioxydants naturels est évitée.

En particulier, lorsque la polyoléfine est du polyéthylène, la température d'extrusion appartient de préférence à la gamme allant de 150 °C à 160 °C, et lorsque la polyoléfine est du polypropylène, la température d'extrusion appartient de préférence à la gamme allant de 180 °C à 190 °C.

L'invention concerne aussi un produit d'emballage constitué, partiellement ou de préférence totalement, du matériau pour emballage alimentaire selon l'invention ou du matériau pour emballage alimentaire obtenu par le procédé selon l'invention. Un tel emballage alimentaire présente l'avantage d'être plus respectueux de l'environnement et de la santé humaine. De plus, grâce à la stabilité thermique du matériau pour emballage alimentaire selon l'invention, ou du matériau pour emballage alimentaire obtenu par le procédé selon l'invention, la mise en forme de l'emballage alimentaire ne provoque pas de dégradation.

L'invention concerne également le recyclage d'un matériau pour emballage alimentaire. Un tel recyclage peut être réalisé par un broyage de l'emballage à recycler afin de produire des paillettes, suivi d'une extrusion des paillettes pour obtenir des granulés, qui sont alors mis en forme par exemple par extrusion ou injection dans un moule.

Enfin, l'invention concerne aussi un matériau pour emballage alimentaire recyclé. Un tel matériau est obtenu par le recyclage du matériau pour emballage alimentaire selon l'invention, et possède les mêmes propriétés physico-chimiques que le matériau pour emballage alimentaire selon l'invention non recyclé, ou des propriétés physico-chimiques similaires, et ce au moins jusqu'à 9 recyclages.

### Exemples

### Exemple 1 : Préparation de matériaux pour emballage alimentaire selon l'invention

Deux matériaux selon l'invention ayant les compositions suivantes ont été préparés (les teneurs sont exprimées en poids par rapport au poids total du matériau) :

**[Table 1]**

| | Matériau 1 (selon l'invention) | Matériau 2 (selon l'invention) |
|---|---|---|
| polypropyléne isotactique (commercialisé par EXXONMOBIL sous la référence PPI014) | 97,6% p/p | - |
| Polyétnyiène (commercialisé par REPSOL sous la référence ALCUDIA^{®} LDPE PE-015) | - | 97,5 % p/p |
| Vitamine E (commercialisé par Stgma-Aldrich-Merck sous la référence T3251 ((±)-α-tocopherol ≥96% pure grade HPLC) | 2.375 % p/p | 2.375 % p/p |
| extrait de bois de Quebracho comprenant au moins 85% en poids de tanins condensés par rapport au poids total de l'extrait sec de l'extrait de bois de Quebracho (commercialisé par la société Unitan sous la référence colotan GTH) | 0,125 %p/p | 0,125 % p/p |

Pour préparer 1 kg du matériau 1, 975 g de polypropylène vierge sont pesés. En parallèle, 2.375 g de vitamine E (huile) sont mélangés dans un bécher à 0.125 g de tannins quebracho (poudre). Le mélange d'antioxydants est ensuite introduit dans une seringue, elle-même placée sur un pousse seringue. Le pousse seringue permet de contrôler le débit des antioxydants dans l'extrudeuse. Le polypropylène et les antioxydants sont introduits simultanément dans une extrudeuse bi-vis co-rotative, en chauffant à 190 °C au niveau de la tête d'extrudeuse.

Pour préparer 1 kg de matériau 2, on procède de la même façon que pour le matériau 1 en remplaçant le polypropylène par le polyéthylène (97,5 g), et en chauffant à 160 °C au niveau de la tête de l'extrudeuse.

Les matériaux 1 et 2 ainsi préparés comprennent 2,5 % en poids d'un mélange 95/5 massique de vitamine E/extrait de bois de Quebracho comprenant au moins 85 % en poids de tanins condensés. La teneur totale en tanins condensés dans les matériaux 1 et 2 est de 0,10625 % en poids par rapport au poids total des matériaux 1 et 2 respectivement.

### Exemple 2 : Préparation de matériaux pour emballage alimentaire hors invention

Six matériaux hors invention ont été préparés. Leurs compositions respectives sont détaillées dans le tableau 2 ci-dessous, dans lequel les teneurs sont exprimées en poids par rapport au poids total du matériau.

**[Table 2]**

| | Matériau : 3A | Matériau 3B | Materiau 4A | Materiau 4B | Materiau 5A | Matériau 5B |
|---|---|---|---|---|---|---|
| polypropylène insotactious (commercialisé par EXXONMOBIL sous la rèférence PP1014) | 97,6% p/p | - | 97,6 % p/p | - | 100 % p/p | |
| Polyèthylène (commercialisé par REPSOL sous la rèférence ALCUDIA^{®} LDFE PE-015) | | 97,5 % p/p | - | 97,5 % p/p | - | 100 % p/p |
| Vitamine E (commercialisé par Sigma-Aldrich-Merck sous la réfèrence T32S1 ((±)-o-tocopherol ≥96% pure grade HPLC) | 2,375 % p/p | 2,375 % p/p | 2,5 % p/p | 2,6 % p/p | | |
| exrait de the vert comprenent 20% en poids de tanins condensés par rapport au poids de l'extrait de thé vert (commercialisé par la société NATURALBIOⓇ sous la référence thé vert matcha en poudre) | 0,125 % p/p | 0,125 % p/p | | - | - | - |

Les matériaux 3A et 3B hors invention comprennent un mélange d'antioxydants composé de vitamine E et d'un extrait de thé vert avec 20 % en poids de tanins condensés.

Les matériaux 3A et 3B hors invention sont préparés comme les matériaux 1 et 2 en remplaçant l'extrait de tannins de quebracho par le thé vert.

Les matériaux 3 et 3B hors invention comprennent alors 2,5 % en poids d'un mélange 95/5 massique de vitamine E/extrait de thé vert comprenant 20 % en poids de tanins condensés. La teneur totale en tanins condensés dans les matériaux 3A et 3B est de 0,025 % en poids par rapport au poids total des matériaux 3A et 3B.

Les matériaux 4A et 4B hors invention comprennent uniquement de la vitamine E en tant qu'antioxydant.

Les matériaux 4A et 4B hors invention sont préparés comme les matériaux 1 et 2 en n'ajoutant que de la vitamine E.

Les matériaux 4A et 4B hors invention ne comprennent pas de tanin condensé.

Les matériaux 5A et 5B hors invention comprennent uniquement une polyoléfine, et sont exemptes d'antioxydant.

Les matériaux 5A et 5B hors invention sont préparés par extrusion de la polyoléfine disponible commercialement.

### Exemple 3 : stabilité thermique

La stabilité thermique des matériaux 1, 2, 3A, 3B, 4A, 4B, 5A et 5B décrits dans les exemples 1 et 2 a été testée. Pour cela, des analyses thermogravimétriques (ATG) ont été réalisées pour chacun de ces matériaux. Cette méthode permet d'évaluer la perte de masse de l'échantillon en fonction de la température.

Les analyses ATG sont réalisées selon le protocole suivant. Environ 10 mg d'échantillon sont introduits dans le four de l'analyseur thermogravimétrique (TGA Q50 de TA instruments) et sont soumis à une rampe en température de 25°C à 600°C sous azote (rampe de 10 °C/min). L'appareil détermine la perte de masse de l'échantillon en fonction de la température.

Les mesures sont rapportées dans le tableau 3 ci-dessous, qui précise les pourcentages massiques pour chaque matériau en fonction de la température.

**[Table 3]**

| | 200°C | 300 X | 400°C | 500°C |
|---|---|---|---|---|
| Matériau 1 | 99,94 | 99,44 | 98,03 | 47,2 |
| Matériau 3A | 99,88 | 99,72 | 92,70 | 0,31 |
| Matériau 4A | 100 | 99,24 | 95,65 | 0,59 |
| Matériau 5A | 100 | 99,61 | 70,19 | 1.33 |
| Matériau 2 | 100 | 99,98 | 98,99 | 42,9 |
| Matériau 3B | 99,89 | 98,87 | 98,99 | 0,99 |
| Matériau 4B | 100 | 99,21 | 93,02 | 0,19 |
| Matériau 5B | 99,87 | 98,98 | 92,89 | 0,56 |

Les résultats montrent une perte de masse en fonction de la température significativement diminuée pour les matériaux 1 et 2 selon l'invention comparés respectivement aux matériaux hors invention 3A, 4A, 5A et 3B, 4B, 5B, et en particulier à partir de 400°C Jusqu'à cette température, la perte de masse due à la décomposition des matériaux 1 et 2 est inférieure à 2%. A 500 °C, les matériaux hors invention ont une perte de masse supérieure à 99%, tandis que les matériaux 1 et 2 selon l'invention ont une perte de masse de 47,2% et 42,9% respectivement.

La stabilité thermique des matériaux selon l'invention est donc améliorée. En particulier, on peut noter l'amélioration de la stabilité thermique due à la présence de l'extrait de bois de Quebracho en combinaison à la vitamine E (matériaux 1 et 2), par rapport à la présence de vitamine E seule (matériaux 4A et 4B) et d'une combinaison de vitamine E et d'extrait de thé vert (matériau 3A et 3B).

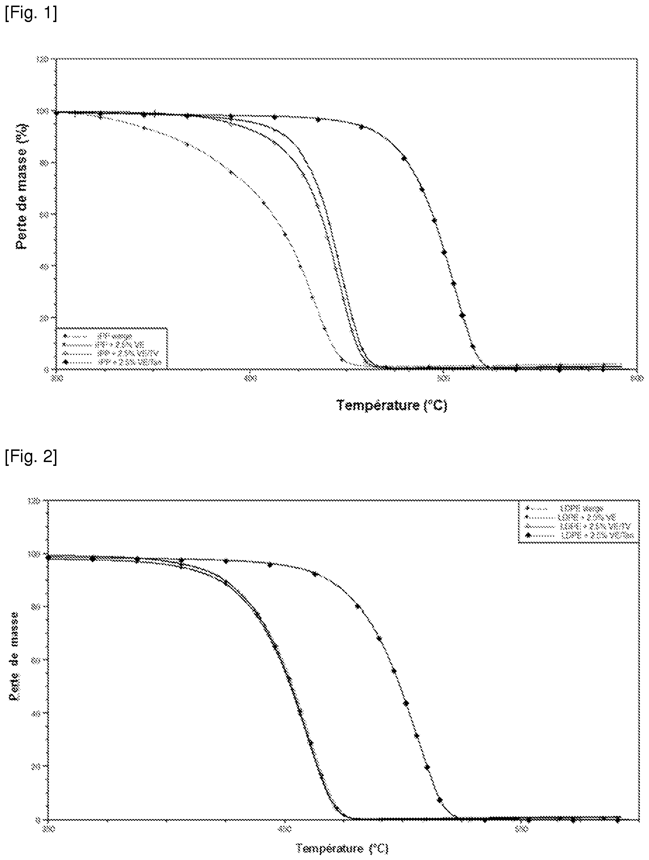

Les résultats représentés à la figure 1 montrent la perte de masse mesurée pour les matériaux 1 (iPP + 2.5% VE/Tan), 3A (iPP + 2.5% VE/TV), 4A (iPP + 2.5% VE) et 5A (IPP vierge).

Les résultats représentés à la figure 2 montrent la perte de masse mesurée pour les matériaux 2 (LDPE + 2.5% VE/Tan), 3B (LDPE + 2.5% VE/TV), 4B (LDPE + 2.5% VE) et 5B (LDPE vierge).

### Exemple 4 : migration du matériau pour emballage alimentaire vers les aliments et recyclage

La migration éventuelle de composés compris dans les matériaux préparés est mesurée selon le protocole décrit dans la publication Analytica Chimica Acta 1058 (2019) 117-126.

Les matériaux 1, 2, 4A, 4B, 5A et 5B ont été testés ici juste après leur fabrication.

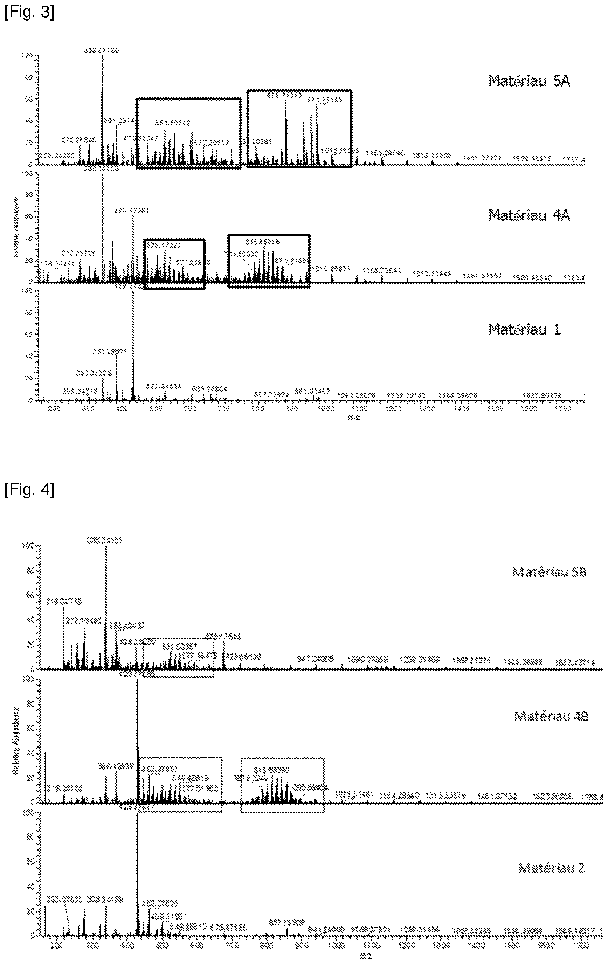

La figure 3 représente les spectrogrammes de masse obtenus avec le matériau 1 selon l'invention, ainsi que les matériaux 4A et 5A hors invention après leur fabrication.

La figure 4 représente les spectrogrammes de masse obtenus avec le matériau 2 selon l'invention, ainsi que les matériaux 4B et 5B hors invention après leur fabrication.

Dans les deux cas, on peut observer la présence d'oligomères (zones encadrées). On observe deux groupes d'oligomères dans le cas du polymère vierge (matériaux 5Aet 5B) et du polymère stabilisé avec de la vitamine E (matériaux 4A et 4B) alors que rien n'apparait lorsque le polymère contient le mélange de vitamine E et d'extrait de bois de Quebracho selon l'invention (matériaux 1 et 2).

Sans vouloir être liés par une quelconque théorie, les inventeurs pensent que la dégradation observée pour les matériaux hors invention est due au procédé de fabrication, en particulier à la température, au temps de séjour dans l'extrudeuse, et au fort cisaillement dans l'extrudeuse. La présence du mélange particulier d'antioxydants selon l'invention permet donc d'obtenir un matériau plus stable, dont la migration des produits de décomposition est évitée lors du premier recyclage, c'est-à-dire lors de sa fabrication.

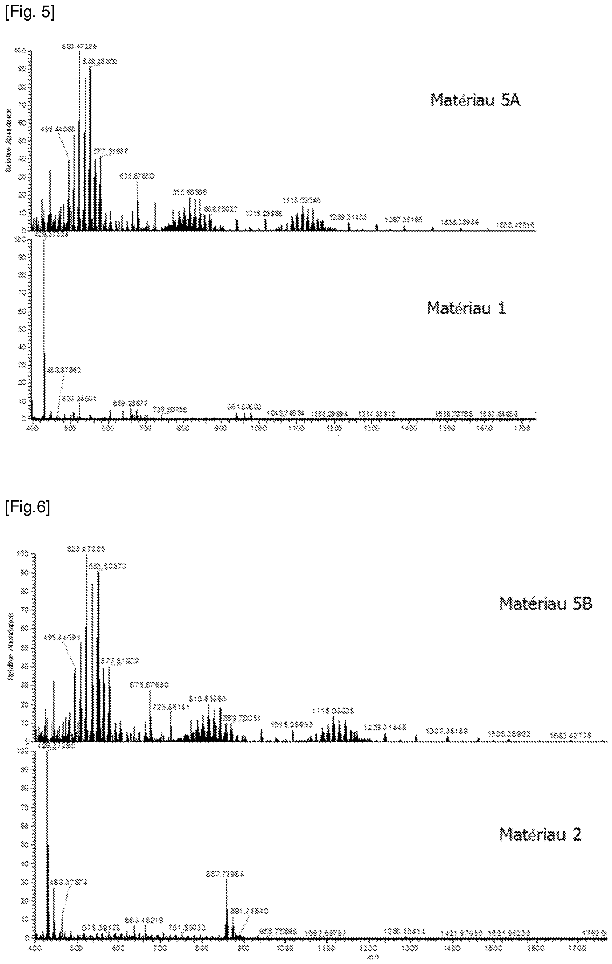

La figure 5 représente les spectrogrammes de masse obtenus avec le matériau 1 selon l'invention, ainsi que le matériau 5A hors invention après 9 recyclages.

La figure 6 représente les spectrogrammes de masse obtenus avec le matériau 2 selon l'invention, ainsi que le matériau 5B hors invention après 9 recyclages.

Pour cela, le recyclage des matériaux est réalisé par extrusion. L'extrusion a été réalisée en re-extrudant de façon consécutive les matériaux dans les mêmes conditions que celles décrites pour la fabrication des différents matériaux.

La comparaison de ces spectrogrammes de masse montre que :
- les matériaux 1 et 2 selon l'invention sont stables puisqu'aucun produit de dégradation n'est observé après 1 ou 9 recyclages ;
- les matériaux 4A et 4B hors invention ne sont pas stables dès le premier recyclage : des produits de dégradation sont observés vers *m*/*z* = 815 notamment ;
- les matériaux 5 A et 5B hors invention ne sont pas stables dès le premier recyclage, et de nouveaux produits de dégradation apparaissent après 9 recyclages .

Aussi, l'association de vitamine E et d'extrait de bois de Quebracho permet bien de stabiliser le matériau pour emballage alimentaire et évite la migration de composés depuis le matériau vers les aliments, et ce pendant au moins 9 recyclages, contrairement aux matériaux hors invention.

L'invention n'est pas limitée aux exemples décrits et représentés car diverses modifications peuvent y être apportées sans sortir de son cadre.

## Revendications

1. Matériau pour emballage alimentaire comprenant une polyoléfine et de la vitamine E, **caractérisé en ce qu'**il comprend en outre un extrait de bois de Quebracho comprenant des tanins condensés, et **en ce que** la teneur en tanins condensés dans le matériau pour emballage alimentaire est d'au moins 0,1% en poids par rapport au poids du matériau pour emballage alimentaire.

2. Matériau pour emballage alimentaire selon la revendication 1, **caractérisé en ce que** l'extrait de bois de Quebracho comprend au moins 50% en poids, de préférence au moins 70% en poids et plus particulièrement au moins 85% en poids de tanins condensés par rapport au poids de l'extrait sec de l'extrait de bois de Quebracho.

3. Matériau pour emballage alimentaire selon la revendication 1 ou 2, **caractérisé en ce que** la teneur totale en vitamine E et en extrait de bois de Quebracho appartient à la gamme allant de 0,5 à 3% en poids, et de préférence de 1 à 2,5% en poids par rapport au poids total du matériau pour emballage alimentaire.

4. Matériau pour emballage alimentaire selon l'une quelconque des revendications précédentes, **caractérisé en ce que** le ratio massique entre la vitamine E et l'extrait du bois de Quebracho appartient à la gamme allant de 90 : 10 à 98 : 2, et en particulier est de 95 : 5.

5. Matériau pour emballage alimentaire selon l'une quelconque des revendications précédentes, **caractérisé en ce que** la polyoléfine est un polyéthylène ou un polypropylène.

6. Matériau pour emballage alimentaire selon l'une quelconque des revendications précédentes, **caractérisé en ce que** la vitamine E est de synthèse.

7. Matériau pour emballage alimentaire selon l'une quelconque des revendications 1 à 5, **caractérisé en ce que** la vitamine E est naturelle.

8. Matériau pour emballage alimentaire selon l'une quelconque des revendications précédentes, **caractérisé en ce qu'**il est recyclable.

9. Procédé de préparation d'un matériau pour emballage alimentaire selon l'une quelconque des revendications précédentes comprenant les étapes successives suivantes :
(i) obtenir un mélange d'antioxydants en mélangeant de la vitamine E et de l'extrait de bois de Quebracho comprenant des tanins condensés,
(ii) incorporer le mélange d'antioxydants à la polyoléfine et extruder le mélange de polyoléfine et d'antioxydants.

10. Procédé selon la revendication précédente, **caractérisé en ce que** l'extrusion est réalisée à une température inférieure à 200 °C.

11. Emballage alimentaire formé à partir de ou comprenant le matériau pour emballage alimentaire selon l'une quelconque des revendications 1 à 8 ou formé à partir de ou comprenant le matériau pour emballage alimentaire obtenu selon le procédé selon la revendication 9 ou 10.

## Patentansprüche

1. Material für die Nahrungsmittelverpackung, umfassend ein Polyolefin und Vitamin E, **dadurch gekennzeichnet, dass** es ferner ein Extrakt aus Quebracho-Holz umfasst, das kondensierte Tannine umfasst, und dass der Gehalt an kondensierten Tanninen in dem Material für die Nahrungsmittelverpackung mindestens 0,1 Gew.-% bezogen auf das Gewicht des Materials für die Nahrungsmittelverpackung beträgt.

2. Material für die Nahrungsmittelverpackung nach Anspruch 1, **dadurch gekennzeichnet, dass** das Extrakt aus Quebracho-Holz zumindest 50 Gew.-%, vorzugsweise zumindest 70 Gew.-% und noch bevorzugter 85 Gew.-% an kondensierten Tanninen bezogen auf das Gewicht des trockenen Extrakts aus Quebracho-Holz beträgt.

3. Material für die Nahrungsmittelverpackung nach Anspruch 1 oder 2, **dadurch gekennzeichnet, dass** der gesamte Gehalt an Vitamin E und an Extrakt aus Quebracho-Holz in den Bereich von 0,5 bis 3 Gew.-%, und vorzugsweise von 1 bis 2,5 Gew.-% bezogen auf das Gesamtgewicht des Materials für die Nahrungsmittelverpackung fällt.

4. Material für die Nahrungsmittelverpackung nach einem der vorhergehenden Ansprüche, **dadurch gekennzeichnet, dass** das Massenverhältnis zwischen Vitamin E und dem Extrakt aus Quebracho-Holz in den Bereich von 90 : 10 bis 98 : 2 fallen, und insbesondere 95 : 5 fällt.

5. Material für die Nahrungsmittelverpackung nach einem der vorhergehenden Ansprüche, **dadurch gekennzeichnet, dass** das Polyolefin ein Polyethylen oder ein Polypropylen ist.

6. Material für die Nahrungsmittelverpackung nach einem der vorhergehenden Ansprüche, **dadurch gekennzeichnet, dass** das Vitamin E synthetisch ist.

7. Material für die Nahrungsmittelverpackung nach einem der Ansprüche 1 bis 5, **dadurch gekennzeichnet, dass** das Vitamin E natürlich ist.

8. Material für die Nahrungsmittelverpackung nach einem der vorhergehenden Ansprüche, **dadurch gekennzeichnet, dass** es rezyklierbar ist.

9. Verfahren zur Herstellung eines Materials für die Nahrungsmittelverpackung nach einem der vorhergehenden Ansprüche, umfassend die folgenden aufeinanderfolgenden Schritte:
(i) Erhalten einer Mischung von Antioxidanzien durch Mischen von Vitamin E und einem Extrakt aus Quebracho-Holz, das kondensierte Tannine umfasst,
(ii) Inkorporieren der Mischung von Antioxidanzien in das Polyolefin und Extrudieren der Mischung aus Polyolefin und Antioxidanzien.

10. Verfahren nach dem vorhergehenden Anspruch, **dadurch gekennzeichnet, dass** die Extrusion bei einer Temperatur von weniger als 200 °C ausgeführt wird.

11. Nahrungsmittelverpackung, die ausgehend von dem Material für die Nahrungsmittelverpackung nach einem der Ansprüche 1 bis 8 gebildet wird oder dieses umfasst, oder die ausgehend von dem nach dem Verfahren nach Anspruch 9 oder 10 erhaltenen Material für die Nahrungsmittelverpackung gebildet wird oder dieses umfasst.

## Claims

1. A food packaging material comprising a polyolefin and vitamin E, **characterized in that** it further comprises a Quebracho wood extract comprising condensed tannins, and **in that** the content of condensed tannins in the material for packaging food is at least 0.1% by weight relative to the weight of the food packaging material.

2. The food packaging material according to claim 1, **characterized in that** the Quebracho wood extract comprises at least 50% by weight, preferably at least 70% by weight and more particularly at least 85% by weight of condensed tannins based on the weight of the dry Quebracho wood extract.

3. The food packaging material according to claim 1 or 2, **characterized in that** the total content of vitamin E and Quebracho wood extract belongs to the range from 0.5 to 3% by weight, and preferably from 1 to 2.5% by weight based on the total weight of the food packaging material.

4. The food packaging material according to any one of the preceding claims, **characterized in that** the mass ratio between vitamin E and the Quebracho wood extract belongs to the range from 90:10 to 98:2, and in particular is 95:5.

5. The food packaging material according to any one of the preceding claims, **characterized in that** the polyolefin is a polyethylene or a polypropylene.

6. The food packaging material according to any one of the preceding claims, **characterized in that** the vitamin E is synthetic.

7. The food packaging material according to any one of claims 1 to 5, **characterized in that** the vitamin E is natural.

8. The food packaging material according to any one of the preceding claims, **characterized in that** it is recyclable.

9. A method for preparing a food packaging material according to any one of the preceding claims, comprising the following successive steps:
(i) obtaining a mixture of antioxidants by mixing vitamin E and the Quebracho wood extract comprising condensed tannins,
(ii) incorporating the mixture of antioxidants into the polyolefin and extruding the mixture of polyolefin and antioxidants.

10. The method according to the preceding claim, **characterized in that** the extrusion is carried out at a temperature below 200°C.

11. A food packaging formed from or comprising the food packaging material according to any one of claims 1 to 8 or formed from or comprising the food packaging material obtained according to the method according to claim 9 or 10.
